# EUROPÄISCHE PATENTSCHRIFT

(11) **EP 4 388 948 B1**
(45) Veröffentlichungstag und Bekanntmachung des Hinweises auf die Patenterteilung: **16.07.2025**
(21) Anmeldenummer: 22215029.4
(22) Anmeldetag: 20.12.2022
(51) Int. Cl.: A47J 36/32, A47J 43/04

(54) **KÜCHENMASCHINE, VERFAHREN ZUR NAHRUNGSMITTELZUBEREITUNG, COMPUTERPROGRAMMPRODUKT UND SPEICHERMEDIUM**
FOOD PROCESSOR, METHOD FOR PREPARING FOOD, COMPUTER PROGRAM PRODUCT AND STORAGE MEDIUM
ROBOT DE CUISINE, PROCÉDÉ DE PRÉPARATION D'ALIMENTS, PRODUIT PROGRAMME INFORMATIQUE ET SUPPORT DE STOCKAGE

(43) Veröffentlichungstag der Anmeldung: 26.06.2024
(60) Teilanmeldung: 25181275.6
(73) Patentinhaber: Vorwerk & Co. Interholding GmbH, 42270 Wuppertal (DE)
(72) Erfinder: Uhlenbrock, Andreas, 81243 München (DE)
(74) Vertreter: Bals & Vogel Patentanwälte PartGmbB

(56) Entgegenhaltungen:
- EP-A1- 3 984 424
- CN-A- 113 662 446
- US-A1- 2019 053 332

## Beschreibung

Die vorliegende Erfindung betrifft eine Küchenmaschine, ein Verfahren zur Nahrungsmittelzubereitung unter Verwendung einer Küchenmaschine, ein Computerprogrammprodukt zum Durchführen eines solchen Verfahrens sowie ein computerlesbares Speichermedium, auf welchem ein solches Computerprogrammprodukt zum Ausführen des Verfahrens gespeichert ist.

Im Stand der Technik sind Küchenmaschinen bekannt, die zur automatisierten Nahrungsmittelzubereitung auf digitale Rezepte zugreifen können. Das Zugreifen auf die Rezepte bzw. auf ein gewünschtes Rezept erfolgt in der Regel elektronisch, nachdem ein Nutzer der Küchenmaschine manuell ein bestimmtes Rezept ausgewählt hat. Zur Zubereitung der gewünschten Speise kann sich der Nutzer sukzessive durch verschiedene Zubereitungsschritte in einer im Rezept vorgegebenen Reihenfolge arbeiten - vergleichbar mit dem Kochen nach einem Rezept in einem Kochbuch. Gattungsgemäße Küchenmaschinen können, basierend auf dem vorliegenden Rezept, Zubereitungsschritte automatisiert oder zumindest teilautomatisiert durchführen. Zwischen automatisierten Zubereitungsschritten können Eingaben und/oder Tätigkeiten durch den Nutzer erforderlich sein. EP 3 984 424 A1 offenbart eine Küchenmaschine, die konfiguriert und ausgestaltet ist zum:
- elektronischen Zugreifen auf ein Rezept und Verarbeiten des Rezepts zum Durchführen einer Nahrungsmittelzubereitung mit mehreren Zubereitungsschritten, wobei die Zubereitungsschritte vom Nutzer manuell durchzuführende Zubereitungsschritte umfassen, bei welchen der Nutzer selbst tätig werden muss,
- Durchführen von Vergleichen zwischen im Rezept vorgegebenen Soll-Arbeitszeiten zum Durchführen der Zubereitungsschritte und von einem Nutzer der Küchenmaschine tatsächlich benötigten Ist-Arbeitszeiten zum Durchführen der Zubereitungsschritte,
- Ermitteln wenigstens eines Geschwindigkeitsfaktors bezüglich einer Arbeitsgeschwindigkeit des Nutzers anhand der durchgeführten Vergleiche, und
- Ermitteln wenigstens einer zukünftigen Soll-Arbeitszeit zum Durchführen wenigstens eines zukünftigen Zubereitungsschrittes anhand einer vorgegebenen Soll-Arbeitszeit und des wenigstens einen ermittelten Geschwindigkeitsfaktors.

Aufgabe der vorliegenden Erfindung ist es, ein verbessertes System sowie ein verbessertes Verfahren zur Nahrungsmittelzubereitung zur Verfügung zu stellen.

Die voranstehende Aufgabe wird durch die Patentansprüche gelöst. Die voranstehende Aufgabe wird durch die Küchenmaschine gemäß des unabhängigen Vorrichtungsanspruchs 1, das Verfahren gemäß des unabhängigen Verfahrensanspruchs 7, das Computerprogrammprodukt gemäß des unabhängigen Computerprogrammprodukt-Anspruchs 12 sowie das Speichermedium gemäß unabhängigen Speichermedium-Anspruch 13 gelöst. Weitere Vorteile der Erfindung ergeben sich aus den Unteransprüchen, der Beschreibung und den Figuren. Dabei gelten Merkmale, die im Zusammenhang mit der Küchenmaschine beschrieben sind, selbstverständlich auch im Zusammenhang mit dem erfindungsgemäßen Verfahren, dem erfindungsgemäßen Computerprogrammprodukt, dem erfindungsgemäßen Speichermedium und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird eine Küchenmaschine gemäß Vorrichtungsanspruch 1 vorgeschlagen.

In der erfindungsgemäßen Küchenmaschine sind Rezepte, insbesondere digital als Datensatz innerhalb eines Speichers hinterlegt, die von einem Steuergerät durch verschiedene Arbeitsschritte, die durch die Küchenmaschine ausgeführt werden, vorzugsweise automatisch abarbeitbar sind. Unter dem Steuergerät kann ein zentrales Steuergerät der Küchenmaschine verstanden werden. Zusätzlich oder alternativ kann die Küchenmaschine dahingehend konfiguriert und ausgestaltet sein, dass die verschiedenen Arbeitsschritte basierend auf Information aus einem Netzwerk, beispielsweise dem Internet, abarbeitbar sind. Auf diese Weise kann ein Nutzer die Küchenmaschine über das Internet, beispielsweise eine Cloud-Funktion, bedienen. Die Küchenmaschine kann folglich als Netzwerk-Küchenmaschine und/oder Küchenmaschine mit Internetzugriff, insbesondere mit drahtlosem Internetzugriff, konfiguriert und ausgestaltet sein. Für den drahtlosen Internetzugriff kann die Küchenmaschine einen geeigneten Funk-Sender/Empfänger aufweisen. Rezepte können demnach in der Küchenmaschine und/oder im Internet, beispielsweise in einer Cloudumgebung, hinterlegt sein. Die Küchenmaschine kann für einen Online-Zugriff auf die Rezepte und/oder zum Modifizieren der online gespeicherten Rezepte konfiguriert und ausgestaltet sein. Die Rezepte sind durch einen Benutzer vorzugsweise durch ein Eingabegerät der Küchenmaschine auswählbar und abrufbar. Ferner verfügt die Küchenmaschine über zumindest eine Gerätefunktion (z.B. Rühren, Wiegen, Kochen oder dergleichen), die durch wenigstens einen Parameter auswählbar und/oder einstellbar ist, um wenigstens den (bzw. einen) Arbeitsschritt aus dem Rezept für eine Zubereitung einer Speise (Nahrungsmittelzubereitung) automatisch durch die jeweilige Gerätefunktion der Küchenmaschine durchzuführen. Dieser Arbeitsschritt stellt einen Zubereitungsschritt dar, der von der Küchenmaschine (selber) durchgeführt wird.

Mit der erfindungsgemäßen Küchenmaschine können während der Nahrungsmittelzubereitung das (digitale) Rezept und insbesondere zukünftige Soll-Arbeitszeiten, abhängig von einem bisherigen und/oder aktuell erkannten Nutzerverhalten, dynamisch verändert werden. Im Gegensatz zu konventionellen Küchenmaschinen werden demnach nicht nur statische bzw. bereits im Rezept hinterlegte Werte für die Bestimmung und Planung der Nahrungsmittelzubereitung verwendet. Wird während der Nahrungsmittelzubereitung und/oder während einer vergangenen Nahrungsmittelzubereitung anhand der Vergleiche erkannt, dass die Ist-Arbeitszeit des Nutzers bzw. der Nutzerin bei jedem Zubereitungsschritt oder bei bestimmten Zubereitungsschritten ca. 10 % länger als die vorgegebene Soll-Arbeitszeit betrug, können die zukünftigen Soll-Arbeitszeiten entsprechend angepasst werden. Das heißt, es könnte ein Geschwindigkeitsfaktor mit dem Wert 1,1 ermittelt bzw. erstellt werden, mit welchem die bislang im Rezept vorgegebenen bzw. hinterlegten und noch durchzuführenden Soll-Arbeitszeiten multipliziert werden können. Auf diese Weise können präzisierte zukünftige Soll-Arbeitszeiten ermittelt werden, mit welchen das Rezept schnell, gezielt und insbesondere noch während der Nahrungsmittelzubereitung an die Arbeitsgeschwindigkeit des Nutzers angepasst werden kann. Auf Basis der adaptierten Arbeitszeit kann auch die Nahrungsmittelzubereitung kontinuierlich optimiert werden.

Das Vergleichen zwischen den im Rezept vorgegebenen Soll-Arbeitszeiten und den vom Nutzer der Küchenmaschine tatsächlich benötigten Ist-Arbeitszeiten kann wenigstens teilweise automatisch und/oder automatisiert durch die Küchenmaschine durchgeführt werden. Hierfür kann die Küchenmaschine eine geeignete Sensorik, Aktorik und/oder Recheneinheit aufweisen. Die Sensorik kann wenigstens einen Sensor zum Erkennen eines Übergangs von einem Zubereitungsschritt zum nächsten Zubereitungsschritt und/oder zum Erkennen eines Starts sowie eines Endes der jeweiligen Zubereitungsschritte aufweisen. Der wenigstens eine Sensor kann mit der Recheneinheit in Signalverbindung stehen, sodass die Recheneinheit anhand der ermittelten Sensordaten die Dauer der jeweiligen Arbeitsschritte bzw. die jeweiligen Ist-Arbeitszeiten ermitteln, insbesondere berechnen, kann. Durch das automatische Durchführen der Vergleiche können der wirtschaftliche Aufwand hierfür geringgehalten und die Küchenmaschine effizient betrieben werden.

Die Sensorik, die Aktorik und/oder die Recheneinheit, die als Teil eines Steuergerätes der Küchenmaschine bereitgestellt sein kann, können zum elektrischen Zugreifen auf das Rezept, zum Verarbeiten des Rezepts, zum Ermitteln der Ist-Arbeitszeiten, zum Ermitteln des wenigstens einen Geschwindigkeitsfaktors und/oder zum Ermitteln der wenigstens einen zukünftigen Soll-Arbeitszeit konfiguriert und ausgestaltet sein. Das elektronische Zugreifen und ein entsprechend elektronisches Verarbeiten des Rezepts können beispielsweise mittels des Steuergerätes der Küchenmaschine durchgeführt werden. Der wenigstens eine Geschwindigkeitsfaktor und die wenigstens eine zukünftige Soll-Arbeitszeit können insbesondere mittels der Recheneinheit, die als Teil des Steuergerätes betrachtet werden kann, sowie anhand von geeigneten Sensordaten, ermittelt und/oder berechnet werden. Unter den zukünftigen Soll-Arbeitszeiten sind insbesondere Soll-Arbeitszeiten für die vom Nutzer durchzuführenden Zubereitungsschritte bzw. die entsprechenden Arbeitsschritte zu verstehen, die noch nicht durchgeführt wurden und zum Fertigstellen des Gerichts bzw. zum Fertigstellen der Nahrungsmittelzubereitung noch durchzuführen sind. Unter diesen zukünftigen Zubereitungsschritten kann insbesondere ein noch ausstehender Teil von Zubereitungsschritten während der Nahrungsmittelzubereitung verstanden werden. Grundsätzlich können unter den zukünftigen Zubereitungsschritten aber auch sämtliche Zubereitungsschritte einer neuen bzw. zukünftigen Nahrungsmittelzubereitung verstanden werden.

Die Zubereitungsschritte, zu welchen die Vergleiche hinsichtlich der zukünftigen Soll-Arbeitszeiten durchgeführt werden, umfassen vom Nutzer manuell durchzuführende Zubereitungsschritte, das heißt, manuelle Zubereitungsschritte, bei welchen der Nutzer selbst tätig werden muss. So kann unter einem Zubereitungsschritt beispielsweise das Schneiden von Lebensmitteln, das Waschen von Lebensmitteln und/oder das Umfüllen von Lebensmitteln von einem Gefäß in ein anderes Gefäß verstanden werden.

Gemäß einer weiteren Ausführungsform der vorliegenden Erfindung ist es möglich, dass eine erfindungsgemäße Küchenmaschine dahingehend konfiguriert und ausgestaltet ist, dass anhand des wenigstens einen Geschwindigkeitsfaktors und/oder anhand der wenigstens einen ermittelten zukünftigen Soll-Arbeitszeit ein Endzeitpunkt der Nahrungsmittelzubereitung und/oder eine Restzeitdauer bis zum Erreichen des Endzeitpunkts ermittelt und für den Nutzer wahrnehmbar dargestellt werden. Unter Berücksichtigung der wenigstens einen ermittelten zukünftigen Soll-Arbeitszeit bzw. unter Berücksichtigung der bisherigen Arbeitsweise des Nutzers und das Implementieren der gewonnenen Erkenntnis auf die noch auszuführenden Zubereitungsschritte und die Zeit, die hierfür voraussichtlich benötigt wird, lassen sich die vermutlich noch verbleibende Arbeitszeit bzw. Restzeitdauer und entsprechend auch der Endzeitpunkt der Nahrungsmittelzubereitung auf einfache Weise relativ genau ermitteln und für den Nutzer wahrnehmbar darstellen. Unter dem Endzeitpunkt der Nahrungsmittelzubereitung ist insbesondere ein Zeitpunkt bzw. eine Zeit zu verstehen, zu welchem bzw. welcher das Gericht voraussichtlich fertiggestellt sein wird. Der Endzeitpunkt kann ferner anhand einer aktuellen Uhrzeit ermittelt werden. Unter dem Ermitteln anhand einer bestimmten Information wie dem Geschwindigkeitsfaktor und/oder der zukünftigen Soll-Arbeitszeit ist im Rahmen der Erfindung ein Ermitteln zu verstehen, bei welchem nicht nur diese Information(en) verwendet werden muss bzw. müssen, sondern auch weitere Informationen und/oder Parameter verwendet und/oder berücksichtigt werden können. Die Küchenmaschine kann ferner dahingehend konfiguriert und ausgestaltet sein, dass anhand des wenigstens einen Geschwindigkeitsfaktors und/oder anhand der wenigstens einen ermittelten zukünftigen Soll-Arbeitszeit die Gesamtdauer der Nahrungsmittelzubereitung ermittelt und für den Nutzer wahrnehmbar dargestellt werden. Der Endzeitpunkt der Nahrungsmittelzubereitung kann abhängig von der aktuellen Uhrzeit eingestellt und für den Nutzer entsprechend wahrnehmbar dargestellt werden.

Eine erfindungsgemäße Küchenmaschine kann ferner dahingehend konfiguriert und ausgestaltet sein, dass die wenigstens eine zukünftige Soll-Arbeitszeit während der Nahrungsmittelzubereitung ermittelt und/oder während der Nahrungsmittelzubereitung für den Nutzer wahrnehmbar dargestellt wird. Das heißt, nachdem die zukünftige Soll-Arbeitszeit ermittelt wurde, wird diese vorzugsweise im Rezept hinterlegt und kann dem Nutzer entsprechend unverzüglich dargestellt werden. Hierzu kann die ursprüngliche bzw. ursprünglich im Rezept vorgegebene Soll-Arbeitszeit verändert werden oder es kann eine neue Soll-Arbeitszeit angelegt werden. Der Nutzer der Küchenmaschine kann auf diese Weise stets über die noch verbleibende und/oder nötige Zeit für die Nahrungsmittelzubereitung bzw. für die einzelnen Zubereitungsschritte dynamisch und entsprechend genau informiert werden. Die zukünftigen Soll-Arbeitszeiten können demnach nicht nur dynamisch ermittelt, sondern auch entsprechend für den Nutzer wahrnehmbar dargestellt werden. Ferner ist es möglich, dass die Küchenmaschine eine Eingabeeinheit zum manuellen und/oder sprachgesteuerten Ändern der zukünftigen Soll-Arbeitszeiten aufweist. Zum Darstellen des Rezepts sowie möglicher Änderungen im Rezept, insbesondere bezüglich der Soll-Arbeitszeiten, einer Restdauer und/oder eines Endzeitpunkts, kann die Küchenmaschine eine Darstelleinheit, insbesondere eine Anzeigeeinheit, aufweisen. Die Anzeigeeinheit, beispielsweise als Teil einer Nutzerschnittstelle ausgestaltet, weist vorzugsweise ein Touch-Display auf, über welches nicht nur Daten abgelesen werden, sondern auch Daten durch den Nutzer eingegeben werden können. Unter der Darstelleinheit kann eine Einheit zum visuellen und/oder akustischen Darstellen von Informationen verstanden werden. Demnach können Soll-Arbeitszeiten nicht nur visuell, sondern auch akustisch, insbesondere mittels Sprachausgabe, darstellt werden. Dasselbe trifft auf analoge Weise auf weitere akustisch und/oder visuell darstellbare Informationen zu.

Eine erfindungsgemäße Küchenmaschine kann ferner dahingehend konfiguriert und ausgestaltet sein, dass die zukünftige Soll-Arbeitszeit zum Durchführen wenigstens eines zukünftigen manuellen Zubereitungsschrittes, insbesondere ausschließlich zum Durchführen des wenigstens einen zukünftigen manuellen Zubereitungsschrittes, ermittelt wird. Mit anderen Worten, es ist möglich, dass die zukünftige Soll-Arbeitszeit nur für manuelle Zubereitungsschritte und nicht für automatische und/oder autonome Zubereitungsschritte, die ohne Beteiligung des Nutzers von der Küchenmaschine selbst durchgeführt werden, ermittelt wird. Auf diese Weise können der Rechenprozess in der Küchenmaschine effizient gestaltet und die Küchenmaschine entsprechend performant sowie stromsparend betrieben werden.

Außerdem ist es gemäß einer Variante der vorliegenden Erfindung möglich, dass eine Küchenmaschine dahingehend konfiguriert und ausgestaltet ist, dass anhand der Vergleiche ein durchschnittlicher Geschwindigkeitsfaktor bezüglich einer durchschnittlichen Arbeitsgeschwindigkeit des Nutzers ermittelt wird und die wenigstens eine zukünftige Soll-Arbeitszeit zum Durchführen des wenigstens einen zukünftigen Zubereitungsschrittes anhand einer vorgegebenen Soll-Arbeitszeit und des ermittelten durchschnittlichen Geschwindigkeitsfaktors ermittelt wird. Mit anderen Worten, anhand von wenigstens zwei durchgeführten Vergleichen kann eine Durchschnittsabweichung der Ist-Arbeitszeit von der Soll-Arbeitszeit ermittelt werden, wovon wiederum der durchschnittliche Geschwindigkeitsfaktor abgeleitet werden kann. Wurden anhand der Vergleiche beispielsweise die Geschwindigkeitsfaktoren 1,1 und 1,3 ermittelt, kann der durchschnittliche Geschwindigkeitsfaktor auf 1,2 gesetzt werden. Die Berechnung bzw. Ermittlung des durchschnittlichen Geschwindigkeitsfaktors kann aufgabenübergreifend oder aufgabenspezifisch durchgeführt werden. Das heißt, werden beispielsweise für das Schneiden von Gemüse ein durchschnittlicher Geschwindigkeitsfaktor von 1,1 und für das Waschen von Obst ein durchschnittlicher Geschwindigkeitsfaktor von 1,3 ermittelt, kann für alle zukünftigen manuellen Zubereitungsschritte, also aufgabenübergreifend bzw. unabhängig von der Art der Zubereitungsschritte, ein durchschnittlicher Geschwindigkeitsfaktor von 1,2 ermittelt werden. Bei einem aufgabenspezifischen Ermitteln des durchschnittlichen Geschwindigkeitsfaktors kann ein durchschnittlicher Geschwindigkeitsfaktor von 1,2 für das Schneiden von Gemüse ermittelt werden, wenn bei mehreren Vergleichen bezüglich des Schneidens von Gemüse beispielsweise zweimal 1,1 und zweimal 1,3 und einmal 1,2 ermittelt wurde. Für andere Aufgaben bzw. für Zubereitungsschritte anderer Art können dann andere Geschwindigkeitsfaktoren und/oder durchschnittliche Geschwindigkeitsfaktoren verwendet werden. Die Küchenmaschine kann außerdem dahingehend konfiguriert und ausgestaltet sein, dass anhand einer ermittelten Abweichung von der durchschnittlichen Arbeitsgeschwindigkeit, beispielsweise aufgrund eines abgelenkten Nutzers, der Endzeitpunkt der Nahrungsmittelzubereitung und/oder die Restzeitdauer bis zum Erreichen des Endzeitpunkts ermittelt und für den Nutzer wahrnehmbar dargestellt werden. Das heißt, wird beispielsweise erkannt, dass der Nutzer für einen Zubereitungsschritt länger braucht als erwartet bzw. anhand des durchschnittlichen Geschwindigkeitsfaktors ermittelt, können der Endzeitpunkt nach hinten verschoben und/oder die dargestellte Restzeitdauer entsprechend verlängert werden. Das gleiche gilt auf analoge Weise für den Fall, dass der Nutzer die Zubereitungsschritte schneller erledigt als erwartet bzw. anhand des durchschnittlichen Geschwindigkeitsfaktors angenommen. Unter Verwendung des durchschnittlichen Geschwindigkeitsfaktors lässt sich ein Rechenprozess zum Ermitteln der wenigstens einen zukünftigen Soll-Arbeitszeit besonders effizient ausführen.

Darüber hinaus ist es bei einem Verfahren gemäß der vorliegenden Erfindung möglich, dass eine Küchenmaschine dahingehend konfiguriert und ausgestaltet ist, dass anhand der Vergleiche unterschiedliche spezifische Geschwindigkeitsfaktoren bezüglich einer jeweiligen Arbeitsgeschwindigkeit für unterschiedliche Zubereitungsschritte ermittelt werden und die wenigstens eine zukünftige Soll-Arbeitszeit zum Durchführen des wenigstens einen zukünftigen Zubereitungsschrittes anhand eines spezifischen Geschwindigkeitsfaktors wird. Das heißt, mittels der unterschiedlichen bzw. spezifischen Geschwindigkeitsfaktoren können die Soll-Arbeitszeiten für unterschiedliche zukünftige Zubereitungsschritte unterschiedlich ermittelt werden. Auf diese Weise können die zukünftigen Soll-Arbeitszeiten besonders genau ermittelt bzw. vorhergesagt werden. Wird anhand des Vergleichs beispielsweise festgestellt, dass der Nutzer zum Waschen von Nahrungsmitteln stets ca. 20 % länger braucht als dies gemäß Soll-Arbeitszeit vorgesehen ist, die Ist-Arbeitszeit beim Mischen von Zutaten jedoch stets ca. 10 % schneller ist als die hierfür vorgegebene Soll-Arbeitszeit, kann dies für die folgenden Zubereitungsschritte, bei welchen ggf. erneut Nahrungsmittel gewaschen und/oder Zutaten vermischt werden müssen, entsprechend berücksichtigt werden. In diesem Fall könnte die Soll-Arbeitszeit zum Waschen von Nahrungsmitteln mit einem Geschwindigkeitsfaktor von 1,2 multipliziert werden, wohingegen die Soll-Arbeitszeit zum Vermischen von Zutaten mit einem Geschwindigkeitsfaktor von 0,9 multipliziert werden könnte.

Eine erfindungsgemäße Küchenmaschine weist ferner einen Profilspeicher zum Speichern unterschiedlicher Nutzerprofile von unterschiedlichen Nutzern der Küchenmaschine auf, wobei die Küchenmaschine dahingehend konfiguriert und ausgestaltet sein kann, dass unterschiedliche Geschwindigkeitsfaktoren von unterschiedlichen Nutzern dem jeweiligen Nutzerprofil zugeordnet werden und die wenigstens eine zukünftige Soll-Arbeitszeit anhand wenigstens eines nutzerspezifischen Geschwindigkeitsfaktors aus dem Nutzerprofil, das für die Nahrungsmittelzubereitung verwendet wird, ermittelt wird. Auf diese Weise kann die wenigstens eine zukünftige Soll-Arbeitszeit dem Nutzer auch dann stets möglichst präzise dargestellt und/oder vorhergesagt werden, wenn die Küchenmaschine von unterschiedlichen Nutzern verwendet wird. Die unterschiedlichen Nutzerprofile können von den Nutzern selbst oder durch die Küchenmaschine, beispielsweise unter Verwendung einer künstlichen Intelligenz, angelegt werden. Sobald die Küchenmaschine verwendet wird, also noch bevor das Rezept ausgewählt und/oder mit der Nahrungsmittelzubereitung begonnen wird, kann der Nutzer sein in der Küchenmaschine hinterlegtes Nutzerprofil abrufen bzw. einstellen. Anhand des nun für die Nahrungsmittelzubereitung vorliegenden Nutzerprofils können die Küchenmaschine und insbesondere ein Steuergerät der Küchenmaschine nun die entsprechenden Geschwindigkeitsfaktoren für den jeweiligen Nutzer verwenden. Das heißt, wird beispielsweise das Nutzerprofil des erfahrenen Kochs "Opa" ausgewählt, kann die wenigstens eine zukünftige Soll-Arbeitszeit anhand eines Geschwindigkeitsfaktors von 0,8 ermittelt und entsprechend eingestellt sowie angezeigt werden. Wird das Nutzerprofil von "Tochter" ausgewählt, kann die wenigstens eine zukünftige Soll-Arbeitszeit anhand eines Geschwindigkeitsfaktors von beispielsweise 1,5 ermittelt und entsprechend eingestellt sowie angezeigt werden. Wird das Nutzerprofil von "Papa" ausgewählt, kann beispielsweise die zukünftige Soll-Arbeitszeit für das Waschen von Nahrungsmitteln anhand eines Geschwindigkeitsfaktors von 0,9 ermittelt und entsprechend eingestellt sowie angezeigt werden. Ferner ist es selbstverständlich möglich, dass auch beim Verwenden von Nutzerprofilen die wenigstens eine zukünftige Soll-Arbeitszeit noch während der Nahrungsmittelzubereitung verändert werden kann. Unter dem Profilspeicher kann ein Gerätespeicher der Küchenmaschine verstanden werden. Ferner ist es möglich, dass der Speicher als dezentraler Speicher, beispielsweise in einem Netzwerk und/oder in einer Cloudumgebung, bereitgestellt wird bzw. ist, auf welchen bzw. welche die Küchenmaschine und insbesondere das Steuergerät der Küchenmaschine Zugriff haben. Die Küchenmaschine und/oder das Steuergerät der Küchenmaschine kann außerdem für einen aktiven Zugriff auf Informationen und/oder Daten in der Cloudumgebung sowie zum Verarbeiten dieser Daten konfiguriert und ausgestaltet sein.

Ein weiterer Aspekt der vorliegenden Erfindung betrifft ein Verfahren gemäß Verfahrensanspruch 7.

Damit bringt das erfindungsgemäße Verfahren die gleichen Vorteile mit sich, wie sie ausführlich mit Bezug auf die erfindungsgemäße Küchenmaschine beschrieben worden sind. Im Rahmen des Verfahrens ist es ferner möglich, dass anhand des wenigstens einen Geschwindigkeitsfaktors und/oder anhand der wenigstens einen ermittelten zukünftigen Soll-Arbeitszeit ein Endzeitpunkt der Nahrungsmittelzubereitung und/oder eine Restzeitdauer bis zum Erreichen des Endzeitpunkts ermittelt und für den Nutzer wahrnehmbar dargestellt werden. Ferner ist es möglich, dass die wenigstens eine zukünftige Soll-Arbeitszeit während der Nahrungsmittelzubereitung ermittelt und/oder während der Nahrungsmittelzubereitung für den Nutzer wahrnehmbar dargestellt wird. Anhand der Vergleiche kann ein durchschnittlicher Geschwindigkeitsfaktor bezüglich einer durchschnittlichen Arbeitsgeschwindigkeit des Nutzers ermittelt, insbesondere kontinuierlich ermittelt, werden, wobei die wenigstens eine zukünftige Soll-Arbeitszeit zum Durchführen des wenigstens einen zukünftigen Zubereitungsschrittes anhand einer vorgegebenen Soll-Arbeitszeit und des ermittelten durchschnittlichen Geschwindigkeitsfaktors ermittelt werden kann. Außerdem ist es möglich, dass anhand der Vergleiche unterschiedliche spezifische Geschwindigkeitsfaktoren bezüglich einer jeweiligen Arbeitsgeschwindigkeit für unterschiedliche Zubereitungsschritte ermittelt werden und die wenigstens eine zukünftige Soll-Arbeitszeit zum Durchführen des wenigstens einen zukünftigen Zubereitungsschrittes anhand eines spezifischen Geschwindigkeitsfaktors ermittelt wird. Gemäß der Erfindung sind unterschiedliche Geschwindigkeitsfaktoren von unterschiedlichen Nutzern einem jeweiligen in der Küchenmaschine hinterlegten Nutzerprofil zugeordnet werden, wobei die wenigstens eine zukünftige Soll-Arbeitszeit anhand wenigstens eines nutzerspezifischen Geschwindigkeitsfaktors aus dem Nutzerprofil, das für die Nahrungsmittelzubereitung verwendet wird, ermittelt werden ist.

Ist die Küchenmaschine als Netzwerk-Küchenmaschine bzw. als Küchenmaschine mit Internetzugriff ausgestaltet, ist es möglich, dass der ermittelte wenigstens eine Geschwindigkeitsfaktor und/oder die ermittelte wenigstens eine zukünftige Soll-Arbeitszeit in das Internet, beispielsweise eine Cloudumgebung, geladen werden. Auf diese Weise können diese Daten für mehrere Nutzer von mehreren Küchenmaschinen gleichzeitig zur Verfügung gestellt werden. Ferner ist es möglich, dass der wenigstens eine Geschwindigkeitsfaktor und/oder die wenigstens eine zukünftige Soll-Arbeitszeit zumindest teilweise im Internet, beispielsweise in einer Cloudumgebung, ermittelt werden. So können beispielsweise Werte, die durch Sensorik der Küchenmaschine ermittelt wurden, in das Internet geladen und dort zum Erlangen der gewünschten Informationen verarbeitet werden. Auf diese Weise kann das Verfahren auch dann noch performant durchgeführt werden, wenn die Rechenleistung der Küchenmaschine selbst niedrig und/oder die entsprechende Recheneinheit der Küchenmaschine veraltet ist. Die auf die vorliegend beschriebene Weise ermittelten Daten und Informationen wie der wenigstens eine Geschwindigkeitsfaktor und/oder die wenigstens eine zukünftige Soll-Arbeitszeit können in Meta-Daten des Rezepts hinterlegt werden. Zum Durchführen des Verfahrens kann beim Zugreifen auf das Rezept auch auf diese Meta-Daten zugegriffen werden. Die Küchenmaschine kann zum Durchführen der jeweiligen Verfahrensschritte konfiguriert und ausgestaltet sein.

Ein weiterer Aspekt der Erfindung betrifft ein Computerprogrammprodukt gemäß Computerprogrammprodukt-Anspruch 12.

Weiterhin betrifft die Erfindung ein computerlesbares Speichermedium gemäß Anspruch 13.

Damit bringen das erfindungsgemäße Computerprogrammprodukt sowie das erfindungsgemäße Speichermedium ebenfalls die vorstehend beschriebenen Vorteile mit sich.

Das Computerprogrammprodukt kann als computerlesbarer Anweisungscode in jeder geeigneten Programmiersprache und/oder Maschinensprache wie beispielsweise in JAVA, C++, C# und/oder Python implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie ein Steuergerät derart programmieren, dass die gewünschten Funktionen ausgeführt werden. Ferner kann das Computerprogrammprodukt in einem Netzwerk wie beispielsweise dem Internet bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, das heißt in Hardware oder in beliebig hybrider Form, das heißt mittels Software-Komponenten und Hardware-Komponenten, realisiert werden und/oder sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind.

Es zeigen jeweils schematisch:
- Figur 1: eine Küchenmaschine gemäß einer Ausführungsform der vorliegenden Erfindung,
- Figur 2: ein computerlesbares Speichermedium mit einem darauf gespeicherten Computerprogrammprodukt gemäß einer Ausführungsform der vorliegenden Erfindung,
- Figur 3: eine Nutzerschnittstelle einer Küchenmaschine gemäß einer konventionellen Konfiguration,
- Figur 4: eine Nutzerschnittstelle zum Erläutern einer ersten Konfigurationsvariante der erfindungsgemäßen Küchenmaschine,
- Figur 5: die Nutzerschnittstelle zum Erläutern einer zweiten Konfigurationsvariante der erfindungsgemäßen Küchenmaschine,
- Figur 6: die Nutzerschnittstelle zum Erläutern einer dritten Konfigurationsvariante der erfindungsgemäßen Küchenmaschine,
- Figur 7: die Nutzerschnittstelle zum Erläutern einer vierten Konfigurationsvariante der erfindungsgemäßen Küchenmaschine, und
- Figur 8: ein Flussdiagramm zum Erläutern eines erfindungsgemäßen Verfahrens zur Nahrungsmittelzubereitung gemäß einer Ausführungsvariante.

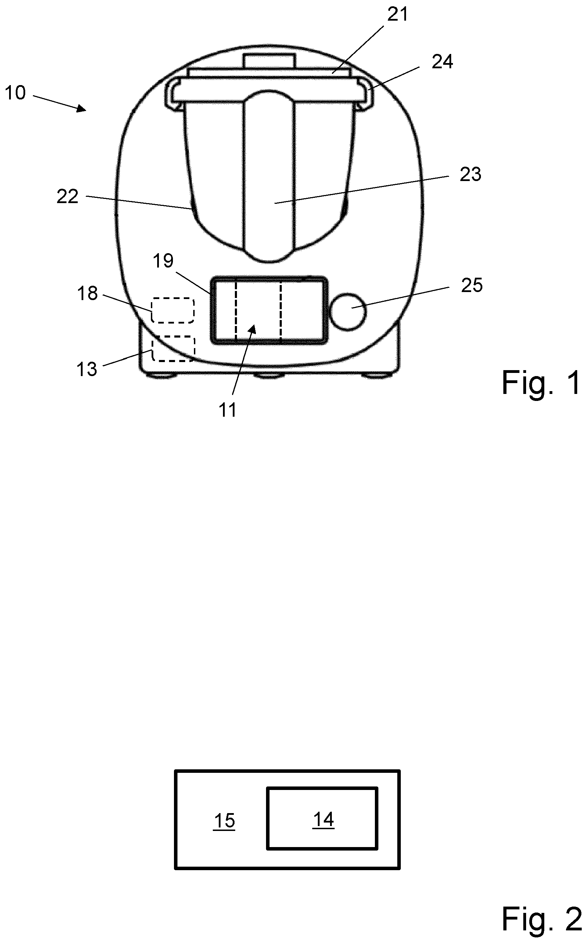

Fig. 1 zeigt eine Küchenmaschine 10 mit einer Nutzerschnittstelle 19, die einen Bildschirm zum Darstellen von Informationen und insbesondere zum Anzeigen eines Rezepts 11 mit mehreren Zubereitungsschritten aufweist. Die Küchenmaschine 10 weist ferner ein Zubereitungsgefäß 20 zum Zubereiten von Speisen und einen Deckel 21 zum Abdecken einer Öffnung des Zubereitungsgefäßes 20 auf. Das Zubereitungsgefäß 20 ist in einer Halterung 22 der Küchenmaschine 10 eingesetzt. Das Zubereitungsgefäß 20 umfasst einen Griff 23, um das Zubereitungsgefäß 20 möglichst einfach aus der Halterung 22 entfernen zu können. Die Küchenmaschine 10 umfasst ferner einen Schließmechanismus 24 zum Verschließen des Zubereitungsgefäßes 20 bzw. zum Andrücken des Deckels 21 an das Zubereitungsgefäß 20.

Die Nutzerschnittstelle 19 ist zum Darstellen einer Benutzeroberfläche auf dem Bildschirm der Nutzerschnittstelle 19 konfiguriert. Der Bildschirm ist vorzugsweise berührungsempfindlich, um beispielsweise Betriebsparameter durch Berühren des Bildschirms einstellen zu können. Der Bildschirm dient als Ein- und Ausgabeeinheit. Die Küchenmaschine 10 kann als zusätzliche Eingabeeinheit einen Dreh- und/oder Druckknopf 25 umfassen, der ebenfalls dazu dienen kann, im Zusammenspiel mit der Benutzeroberfläche einen oder mehrere Betriebsparameter, beispielsweise neue Soll-Arbeitszeiten, einzustellen.

Die Küchenmaschine 1 weist außerdem einen schematisch dargestellten Profilspeicher 18 sowie ein schematisch dargestelltes Steuergerät 13 mit einem Prozessor auf. Durch das Steuergerät 13 kann zur Nahrungsmittelzubereitung auf das digitale Rezept 11 zugegriffen werden, sodass die Küchenmaschine 10 und ggf. weitere Küchengeräte so betrieben werden, wie es in Zubereitungsschritten des Rezepts 11 definiert ist.

In Fig. 2 ist ein computerlesbares und nichtflüchtiges Speichermedium 15 in Form eines Memory-Sticks bzw. eines Flash-Drives dargestellt. Auf dem Speichermedium 15 ist ein Computerprogrammprodukt 14 installiert, das für eine Nahrungsmittelzubereitung mittels der in Fig. 1 gezeigten Küchenmaschine 10 ausgeführt und/oder in der Küchenmaschine 10 installiert werden kann.

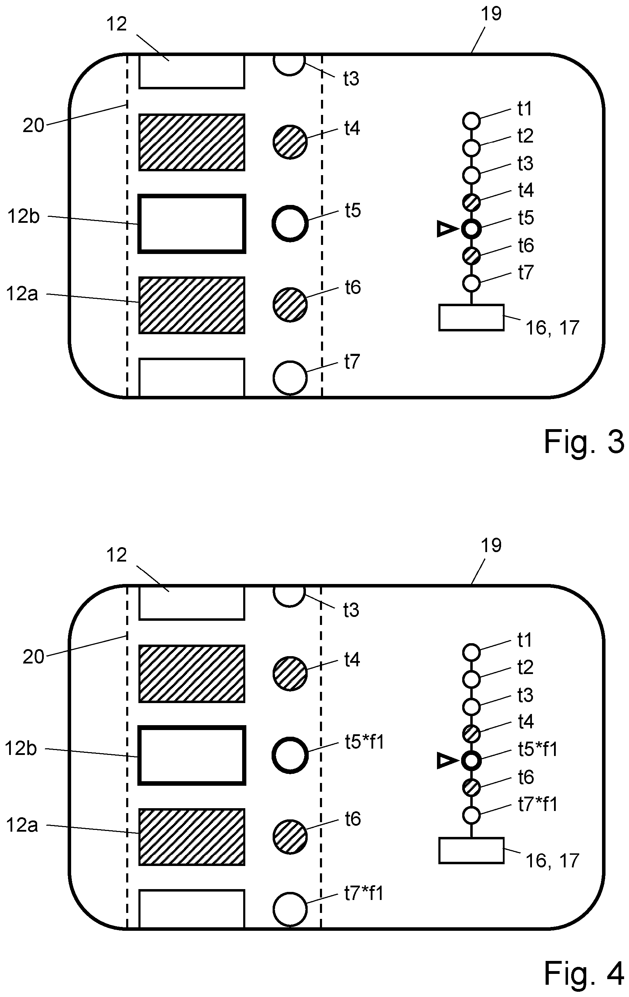

Mit Bezug auf die Figuren 3 bis 8 werden anschließend verschiedene Konfigurationsvarianten der Küchenmaschine 10 erläutert. Die Konfigurationsvarianten sind nicht abschließend und können gleichzeitig bzw. gemeinsam in der Küchenmaschine 10 implementiert sein oder werden. Fig. 3 zeigt den Bildschirm einer Nutzerschnittstelle 19 einer Küchenmaschine 10 gemäß einer konventionellen Konfiguration. Wie in Fig. 3 dargestellt, wird auf dem Bildschirm das Rezept 11 mit unterschiedlichen Zubereitungsschritten 12, 12a dargestellt. Autonome Zubereitungsschritte 12a, die durch die Küchenmaschine 10 selbst durchgeführt werden können, die also keine zusätzliche Handlung des Nutzers erfordern, sind schraffiert dargestellt. Autonome Zubereitungsschritte 12a besitzen eine feste Dauer, die nicht durch die Geschwindigkeit des Nutzers beeinflusst werden kann. Manuelle oder zumindest teilweise manuell durchzuführende Zubereitungsschritte, zu welchen im gezeigten Beispiel die Soll-Arbeitszeiten ermittelt werden, sind als einfache Boxen dargestellt. Aktive Zubereitungsschritte 12b bzw. manuelle aktive Zubereitungsschritte 12b, die der Nutzer aktuell ausführt oder ausführen sollte, sind im dargestellten Beispiel fett umrandet. Neben den verschiedenen Zubereitungsschritten 12, 12a wird jeweils eine zugehörige bzw. zubereitungsschrittspezifische Soll-Arbeitszeit t1 - t7 angezeigt. Neben dem Rezept 11 wird ferner eine Zeitübersicht mit sämtlichen Soll-Arbeitszeiten t1 - t7 dargestellt. Am unteren Ende der Zeitübersicht werden im gezeigten Beispiel ein Endzeitpunkt 16 der Nahrungsmittelzubereitung sowie eine Restzeitdauer 17 bis zum Erreichen des Endzeitpunkts 16 dargestellt.

In Fig. 4 ist eine Nutzerschnittstelle 19 zum Erläutern einer ersten Konfigurationsvariante der Küchenmaschine 10 dargestellt. Gemäß der in Fig. 4 gezeigten Konfigurationsvariante ist die Küchenmaschine 10 zum elektronischen Zugreifen auf das Rezept 11 sowie zum Verarbeiten des Rezepts 11 zum Durchführen einer Nahrungsmittelzubereitung mit mehreren Zubereitungsschritten 12 konfiguriert und ausgestaltet. Ferner ist die Küchenmaschine 10 konfiguriert und ausgestaltet, Vergleiche zwischen im Rezept 11 vorgegebenen Soll-Arbeitszeiten t1 - t3, t5, t7 zum Durchführen der manuellen Zubereitungsschritte 12 und vom Nutzer der Küchenmaschine 10 tatsächlich benötigten Ist-Arbeitszeiten zum Durchführen der manuellen Zubereitungsschritte 12 auszuführen. Weiterhin ist die Küchenmaschine 10 konfiguriert und ausgestaltet, einen Geschwindigkeitsfaktor f1 bezüglich einer Arbeitsgeschwindigkeit des Nutzers anhand der durchgeführten Vergleiche zu ermitteln. Gemäß dem in Fig. 4 gezeigten Beispiel wird der Geschwindigkeitsfaktor f1 anhand von Vergleichen zwischen den Soll-Arbeitszeiten t1 - t3 und den Ist-Arbeitszeiten während der ersten drei manuellen Zubereitungsschritte 12 ermittelt. Die Küchenmaschine 10 ist nun ferner dahingehend konfiguriert und ausgestaltet, dass die zukünftigen manuell bzw. vom Nutzer benötigten Soll-Arbeitszeiten zum Durchführen der entsprechenden zukünftigen manuellen Zubereitungsschritte 12 anhand der vorgegebenen Soll-Arbeitszeit t5, t7 sowie anhand des ermittelten Geschwindigkeitsfaktors f1 ermittelt und entsprechend auf dem Bildschirm der Nutzerschnittstelle 19 dargestellt werden. Hierzu werden die noch folgenden vorgegebenen Soll-Arbeitszeiten t5, t7 mit dem ermittelten Geschwindigkeitsfaktor f1 multipliziert.

Auf die vorstehend beschriebene Weise ist es nun möglich, anhand des Geschwindigkeitsfaktors f1 und/oder anhand der ermittelten zukünftigen Soll-Arbeitszeiten den Endzeitpunkt 16 der Nahrungsmittelzubereitung und/oder die Restzeitdauer 17 bis zum Erreichen des Endzeitpunkts 16 während der Nahrungsmittelzubereitung abhängig vom Nutzerverhalten dynamisch anzupassen und dem Nutzer entsprechend darzustellen. Die zukünftigen Soll-Arbeitszeiten werden demnach während der Nahrungsmittelzubereitung ermittelt und auch während der Nahrungsmittelzubereitung für den Nutzer wahrnehmbar dargestellt.

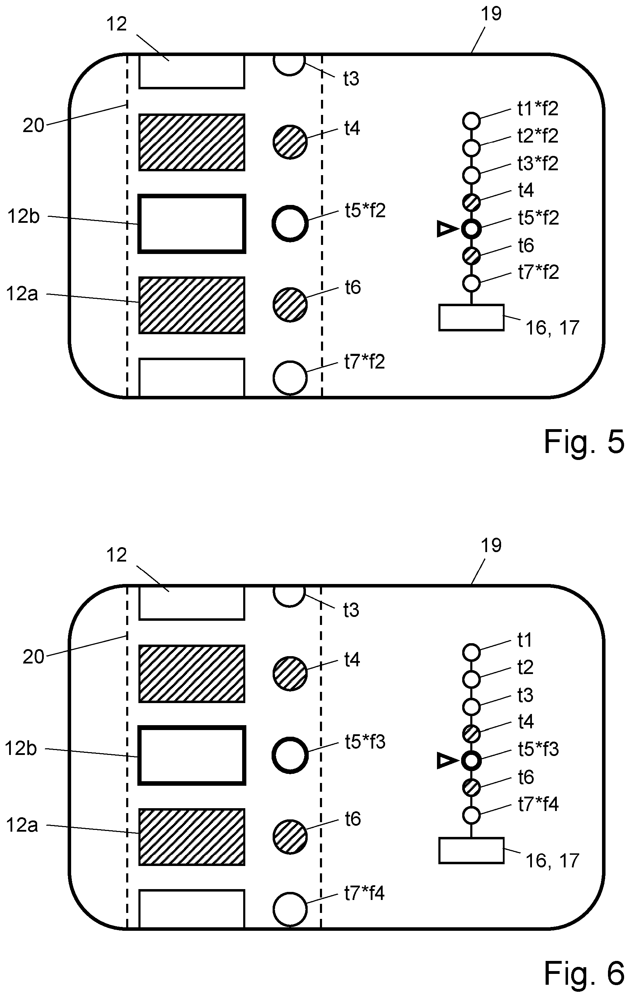

In Fig. 5 ist eine Nutzerschnittstelle 19 zum Erläutern einer zweiten Konfigurationsvariante der Küchenmaschine 10 dargestellt, bei welcher die Küchenmaschine so konfiguriert und ausgestaltet ist, dass anhand der Vergleiche ein durchschnittlicher Geschwindigkeitsfaktor f2 bezüglich einer durchschnittlichen Arbeitsgeschwindigkeit des Nutzers ermittelt wird und die zukünftigen Soll-Arbeitszeiten zum Durchführen der zukünftigen manuellen Zubereitungsschritte 12 anhand der vorgegebenen Soll-Arbeitszeiten sowie anhand der ermittelten durchschnittlichen Geschwindigkeitsfaktoren f2 ermittelt und anschließend auf dem Bildschirm der Nutzerschnittstelle 19 dargestellt werden. Wie in Fig. 4 dargestellt, werden hierzu die im Rezept ursprünglich vorgegebenen Soll-Arbeitszeiten t1 - t3, t5, t7 zum manuellen Durchführen der entsprechenden Zubereitungsschritte 12 jeweils mit dem durchschnittlichen Geschwindigkeitsfaktor f2 multipliziert.

In Fig. 6 ist eine Nutzerschnittstelle 19 zum Erläutern einer dritten Konfigurationsvariante der Küchenmaschine 10 dargestellt, bei welcher die Küchenmaschine 10 dahingehend konfiguriert und ausgestaltet ist, dass anhand der Vergleiche unterschiedliche spezifische Geschwindigkeitsfaktoren f3, f4 bezüglich einer jeweiligen Arbeitsgeschwindigkeit für unterschiedliche manuelle Zubereitungsschritte 12 ermittelt werden und zukünftige Soll-Arbeitszeiten t5, t7 zum Durchführen der zugehörigen Zubereitungsschritte 12 anhand der spezifischen Geschwindigkeitsfaktoren f3, f4 ermittelt und anschließend auf dem Bildschirm der Nutzerschnittstelle 19 dargestellt werden. Im gezeigten Beispiel wird die fünfte Soll-Arbeitszeit mit einem spezifischen Geschwindigkeitsfaktor f3 multipliziert und die siebte Soll-Arbeitszeit t7 wird mit einem anderen bzw. unterschiedlichen spezifischen Geschwindigkeitsfaktor f4 multipliziert.

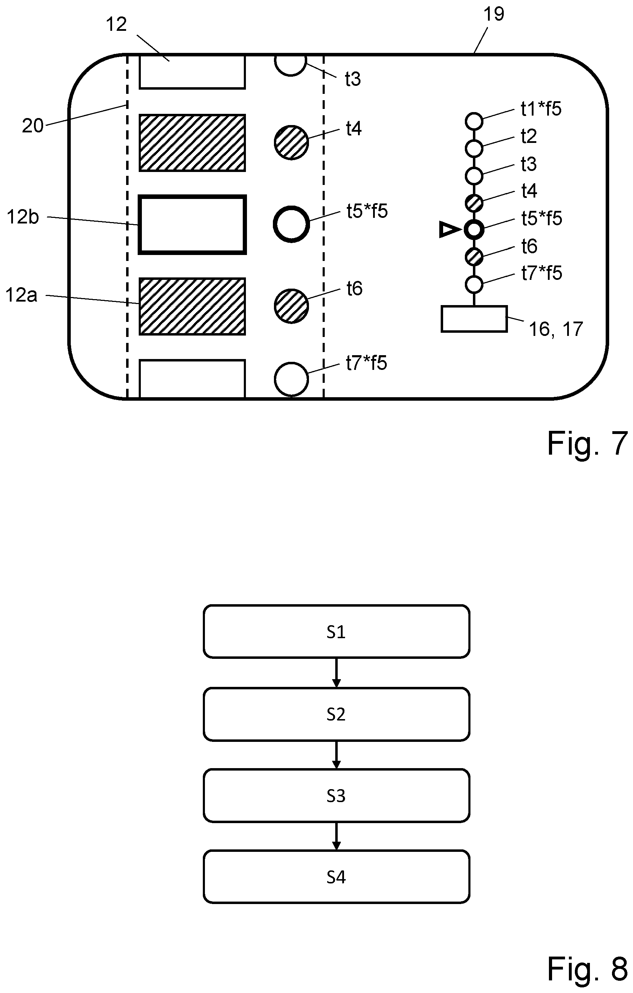

In Fig. 7 ist eine Nutzerschnittstelle 19 zum Erläutern einer vierten Konfigurationsvariante der Küchenmaschine 10 dargestellt, bei welcher die Küchenmaschine 10 dahingehend konfiguriert und ausgestaltet ist, dass unterschiedliche Geschwindigkeitsfaktoren f1, f5 (in Fig. 7 nur Geschwindigkeitsfaktor f5 gezeigt) von unterschiedlichen Nutzern einem jeweiligen Nutzerprofil im Profilspeicher 18 zugeordnet werden und zukünftige Soll-Arbeitszeiten anhand eines nutzerspezifischen Geschwindigkeitsfaktors f5 aus dem Nutzerprofil, das für die Nahrungsmittelzubereitung verwendet wird, ermittelt wird. Die Küchenmaschine könnte selbstverständlich auch dahingehend konfiguriert und ausgestaltet sein, dass an Stelle des einen Geschwindigkeitsfaktors f5 auch mehrere unterschiedliche Geschwindigkeitsfaktoren je Nutzerprofil angelegt und verwendet werden können.

Fig. 8 zeigt ein Flussdiagramm zum Erläutern einer Ausführungsvariante eines Verfahrens zur Nahrungsmittelzubereitung unter Verwendung der vorstehend beschriebenen Küchenmaschine 10. Hierzu wird in einem Schritt S1 elektronisch auf ein digitales Rezept 11 zugegriffen und zum Durchführen der Nahrungsmittelzubereitung mit mehreren Zubereitungsschritten 12, 12a entsprechend elektronisch verarbeitet. In einem Schritt S2 werden Vergleiche zwischen im Rezept 11 vorgegebenen Soll-Arbeitszeiten t1 - t3, t5, t7 zum Durchführen der manuellen Zubereitungsschritte 12 und von einem Nutzer der Küchenmaschine 10 tatsächlich benötigten Ist-Arbeitszeiten zum Durchführen der manuellen Zubereitungsschritte 12 durchgeführt. An dieser Stelle sei erwähnt, dass die vorliegend beschriebenen Verfahrensschritte nicht in der dargestellten Reihenfolge durchgeführt werden müssen. Die Schritte S1 und S2 können beispielsweise auch teilweise gleichzeitig durchgeführt werden. In einem Schritt S3 wird, wie beispielsweise in Fig. 4 gezeigt, ein Geschwindigkeitsfaktor f1 bezüglich einer Arbeitsgeschwindigkeit des Nutzers anhand der durchgeführten Vergleiche ermittelt. Anschließend werden in einem Schritt S4 zukünftige Soll-Arbeitszeiten zum Durchführen zukünftiger manueller Zubereitungsschritte 12 anhand der ursprünglich vorgegebenen Soll-Arbeitszeiten t5, t7 und des ermittelten Geschwindigkeitsfaktors f1 ermittelt.

In der folgenden Tabelle ist zur Erläuterung des erfindungsgemäßen Verfahrens (zur Nahrungsmittelzubereitung) gemäß einer weiteren Ausführungsvariante dargestellt.

**Tabelle:**

| **Zubereitungsschritt** | **Schritt-Typ** | **Initiale Soll-Arbeitszeit** | **Neue Ist-Arbeitszeit** | **Uhrzeit** |
|---|---|---|---|---|
| Backofen vorheizen | Manuell | 120 Sekunden | 132 Sekunden | 12:02:12 Uhr |
| Backform einfetten | Manuell | 180 Sekunden | 198 Sekunden | 12:05:30 Uhr |
| Zutaten in Mixtopf geben | Manuell | 480 Sekunden | 528 Sekunden | 12:10:18 Uhr |
| 3 Minuten in Mixtopf kneten | | 180 Sekunden | 180 Sekunden | 12:13:18 Uhr |
| Teig auf Arbeitsfläche formen und anschließend in Backform geben | Manuell | 180 Sekunden | 198 Sekunden | 12:16:36 Uhr |
| 60 Minuten bei 200 Grad backen | Maschine | 3.600 Sekunden | 3.600 Sekunden | 13:16:36 Uhr |
| Brot auf Gitter stürzen, abkühlen lassen und in Scheiben schneiden | Manuell | 180 Sekunden | 198 Sekunden | **13:19:54 Uhr** |
| **Total** | | **1 Stunde** | **1 Stunde** | |
| | | **15 Minuten** | **19 Minuten** | |
| | | | **54 Sekunden** | |

Mit Bezug auf die zuvor dargestellte Tabelle wird ein Ausführungsbeispiel des zur Fig. 8 erläuterten Verfahrens im weiteren Detail beschrieben, wobei ein Geschwindigkeitsfaktor 1,1 verwendet wird. In einem ersten manuell durchzuführenden Zubereitungsschritt ist zunächst ein Backofen vorzuheizen. Hierfür wäre eine initiale Soll-Arbeitszeit von 120 Sekunden vorgegeben, wobei die initiale Soll-Arbeitszeit anhand des Geschwindigkeitsfaktors um 10 % verlängert wird, sodass eine neue bzw. entsprechend geänderte Soll-Arbeitszeit von 132 Sekunden ermittelt wird. Anhand einer aktuellen Uhrzeit sowie der neuen Soll-Arbeitszeit wird ferner die voraussichtliche Endzeit bis zum Beenden des ersten Zubereitungsschrittes ermittelt. Die Endzeit bzw. Uhrzeit kann auf dem Bildschirm der Nutzerschnittstelle 19 dargestellt werden. Die mit Bezug auf den ersten Schritt erläuterte Vorgehensweise wird anschließend auch für die weiteren manuellen Zubereitungsschritte durchgeführt. Anhand der jeweils neuen bzw. geänderten Soll-Arbeitszeiten wird außerdem eine neue Gesamt-Arbeitszeit ermittelt, basierend auf welcher wiederum der voraussichtliche Endzeitpunkt der Nahrungsmittelzubereitung ermittelt wird.

### Bezugszeichenliste

- 10: Küchenmaschine
- 11: Rezept
- 12: manueller Zubereitungsschritt
- 12a: autonomer Zubereitungsschritt
- 12b: aktiver Zubereitungsschritt
- 13: Steuergerät
- 14: Computerprogrammprodukt
- 15: Speichermedium
- 16: Endzeitpunkt
- 17: Restzeitdauer
- 18: Profilspeicher
- 19: Nutzerschnittstelle
- 20: Zubereitungsgefäß
- 21: Deckel
- 22: Halterung
- 23: Griff
- 24: Schließmechanismus
- 25: Druckknopf

## Patentansprüche

1. Küchenmaschine (10), die konfiguriert und ausgestaltet ist zum:
- elektronischen Zugreifen auf ein Rezept (11) und Verarbeiten des Rezepts (11) zum Durchführen einer Nahrungsmittelzubereitung mit mehreren Zubereitungsschritten (12), wobei die Zubereitungsschritte vom Nutzer manuell durchzuführende Zubereitungsschritte umfassen, bei welchen der Nutzer selbst tätig werden muss,
- Durchführen von Vergleichen zwischen im Rezept (11) vorgegebenen Soll-Arbeitszeiten (t1 - t7) zum Durchführen der Zubereitungsschritte (12) und von einem Nutzer der Küchenmaschine (10) tatsächlich benötigten Ist-Arbeitszeiten zum Durchführen der Zubereitungsschritte (12),
- Ermitteln wenigstens eines Geschwindigkeitsfaktors (f1; f2; f3, f4; f5) bezüglich einer Arbeitsgeschwindigkeit des Nutzers anhand der durchgeführten Vergleiche, wobei der wenigstens eine Geschwindigkeitsfaktor (f1; f2; f3, f4; f5) erhalten wird, indem die Ist-Arbeitszeiten durch die entsprechenden Soll-Arbeitszeiten (t1 - t7) geteilt werden, und
- Ermitteln wenigstens einer zukünftigen Soll-Arbeitszeit zum Durchführen wenigstens eines zukünftigen Zubereitungsschrittes (12) anhand einer vorgegebenen Soll-Arbeitszeit und des wenigstens einen ermittelten Geschwindigkeitsfaktors (f1; f2; f3, f4; f5),
- wobei die Küchenmaschine (10) einen Profilspeicher (18) aufweist, oder dazu eingerichtet ist, auf einen dezentralen Profilspeicher, beispielsweise ein Netzwerk und/oder eine Cloudumgebung, zuzugreifen, zum Speichern unterschiedlicher Nutzerprofile von unterschiedlichen Nutzern der Küchenmaschine (10), wobei die Küchenmaschine (10) dahingehend konfiguriert und ausgestaltet ist, dass unterschiedliche Geschwindigkeitsfaktoren (f1, f5) von unterschiedlichen Nutzern dem jeweiligen Nutzerprofil zugeordnet werden und die wenigstens eine zukünftige Soll-Arbeitszeit anhand wenigstens eines nutzerspezifischen Geschwindigkeitsfaktors (f1; f2; f3, f4; f5) aus dem Nutzerprofil, das für die Nahrungsmittelzubereitung verwendet wird, ermittelt wird.

2. Küchenmaschine (10) nach Anspruch 1, die dahingehend konfiguriert und ausgestaltet ist, dass anhand des wenigstens einen Geschwindigkeitsfaktors (f1; f2; f3, f4; f5) und/oder anhand der wenigstens einen ermittelten zukünftigen Soll-Arbeitszeit ein Endzeitpunkt (16) der Nahrungsmittelzubereitung und/oder eine Restzeitdauer (17) bis zum Erreichen des Endzeitpunkts (16) ermittelt und für den Nutzer wahrnehmbar dargestellt werden.

3. Küchenmaschine (10) nach einem der voranstehenden Ansprüche, die dahingehend konfiguriert und ausgestaltet ist, dass die wenigstens eine zukünftige Soll-Arbeitszeit während der Nahrungsmittelzubereitung ermittelt und/oder während der Nahrungsmittelzubereitung für den Nutzer wahrnehmbar dargestellt wird.

4. Küchenmaschine (10) nach einem der voranstehenden Ansprüche, die dahingehend konfiguriert und ausgestaltet ist, dass die zukünftige Soll-Arbeitszeit zum Durchführen eines zukünftigen manuellen Zubereitungsschrittes (12) ermittelt wird, wobei die Soll-Arbeitszeit mit dem wenigstens einen Geschwindigkeitsfaktor (f1; f2; f3, f4; f5) multipliziert wird, um den zukünftigen manuellen Zubereitungsschritt (12) zu erhalten.

5. Küchenmaschine (10) nach einem der voranstehenden Ansprüche, die dahingehend konfiguriert und ausgestaltet ist, dass anhand der Vergleiche ein durchschnittlicher Geschwindigkeitsfaktor (f2) bezüglich einer durchschnittlichen Arbeitsgeschwindigkeit des Nutzers ermittelt wird und die wenigstens eine zukünftige Soll-Arbeitszeit zum Durchführen des wenigstens einen zukünftigen Zubereitungsschrittes (12) anhand einer vorgegebenen Soll-Arbeitszeit und des ermittelten durchschnittlichen Geschwindigkeitsfaktors (f2) ermittelt wird.

6. Küchenmaschine (10) nach einem der voranstehenden Ansprüche, die dahingehend konfiguriert und ausgestaltet ist, dass anhand der Vergleiche unterschiedliche spezifische Geschwindigkeitsfaktoren (f3, f4) bezüglich einer jeweiligen Arbeitsgeschwindigkeit für unterschiedliche Zubereitungsschritte (12) ermittelt werden und die wenigstens eine zukünftige Soll-Arbeitszeit zum Durchführen des wenigstens einen zukünftigen Zubereitungsschrittes (12) anhand eines spezifischen Geschwindigkeitsfaktors (f3, f4) ermittelt wird.

7. Verfahren zur Nahrungsmittelzubereitung unter Verwendung einer Küchenmaschine (10) nach einem der voranstehenden Ansprüche, aufweisend:
- elektronisches Zugreifen auf ein Rezept (11) und Verarbeiten des Rezepts (11) zum Durchführen der Nahrungsmittelzubereitung mit mehreren Zubereitungsschritten (12),
- Durchführen von Vergleichen zwischen im Rezept (11) vorgegebenen Soll-Arbeitszeiten (t1 - t7) zum Durchführen der Zubereitungsschritte (12) und von einem Nutzer der Küchenmaschine (10) tatsächlich benötigten Ist-Arbeitszeiten zum Durchführen der Zubereitungsschritte (12),
- Ermitteln wenigstens eines Geschwindigkeitsfaktors (f1; f2; f3, f4; f5) bezüglich einer Arbeitsgeschwindigkeit des Nutzers anhand der durchgeführten Vergleiche, wobei der wenigstens, eine Geschwindigkeitsfaktor (f1, f2. f3, f4, f5) erhalten wird, indem die Ist-Arbeitszeiten durch die entsprechenden Soll-Arbeitszeiten (t 1 - t7) geteilt werden, und
- Ermitteln wenigstens einer zukünftigen Soll-Arbeitszeit zum Durchführen wenigstens eines zukünftigen Zubereitungsschrittes (12) anhand einer vorgegebenen Soll-Arbeitszeit und des wenigstens einen ermittelten Geschwindigkeitsfaktors (f1; f2; f3, f4; f5)
- wobei unterschiedliche Geschwindigkeitsfaktoren (f1, f5) von unterschiedlichen Nutzern einem jeweiligen Nutzerprofil zugeordnet werden und die wenigstens eine zukünftige Soll-Arbeitszeit anhand wenigstens eines nutzerspezifischen Geschwindigkeitsfaktors (f1; f2; f3, f4; f5) aus dem Nutzerprofil, das für die Nahrungsmittelzubereitung verwendet wird, ermittelt wird, wobei das Nutzerprofil in einem Profilspeicher (18) der Küchenmaschine (10) oder in einem dezentralen Profilspeicher, beispielsweise einem Netzwerk und/oder einer Cloudumgebung, hinterlegt ist.

8. Verfahren nach Anspruch 7, wobei anhand des wenigstens einen Geschwindigkeitsfaktors (f1; f2; f3, f4; f5) und/oder anhand der wenigstens einen ermittelten zukünftigen Soll-Arbeitszeit ein Endzeitpunkt (16) der Nahrungsmittelzubereitung und/oder eine Restzeitdauer (17) bis zum Erreichen des Endzeitpunkts (16) ermittelt und für den Nutzer wahrnehmbar dargestellt werden.

9. Verfahren nach einem der Ansprüche 7 bis 8, wobei die wenigstens eine zukünftige Soll-Arbeitszeit während der Nahrungsmittelzubereitung ermittelt und/oder während der Nahrungsmittelzubereitung für den Nutzer wahrnehmbar dargestellt wird.

10. Verfahren nach einem der Ansprüche 7 bis 9, wobei anhand der Vergleiche ein durchschnittlicher Geschwindigkeitsfaktor (f2) bezüglich einer durchschnittlichen Arbeitsgeschwindigkeit des Nutzers ermittelt wird und die wenigstens eine zukünftige Soll-Arbeitszeit zum Durchführen des wenigstens einen zukünftigen Zubereitungsschrittes (12) anhand einer vorgegebenen Soll-Arbeitszeit und des ermittelten durchschnittlichen Geschwindigkeitsfaktors (f2) ermittelt wird.

11. Verfahren nach einem der Ansprüche 7 bis 10, wobei anhand der Vergleiche unterschiedliche spezifische Geschwindigkeitsfaktoren (f3, f4) bezüglich einer jeweiligen Arbeitsgeschwindigkeit für unterschiedliche Zubereitungsschritte (12) ermittelt werden und die wenigstens eine zukünftige Soll-Arbeitszeit zum Durchführen des wenigstens einen zukünftigen Zubereitungsschrittes (12) anhand eines spezifischen Geschwindigkeitsfaktors (f3, f4) ermittelt wird.

12. Computerprogrammprodukt (14), umfassend Befehle, die bei der Ausführung des Computerprogrammprodukts (14) durch einen Computer diesen veranlassen, das Verfahren nach einem der Ansprüche 7 bis 11 auszuführen.

13. Computerlesbares Speichermedium (15) mit einem darauf gespeicherten Computerprogrammprodukt (14) nach Anspruch 12.

## Claims

1. A food processor (10) configured and designed to:
- electronically accessing a recipe (11) and processing the recipe (11) to perform a food preparation comprising a plurality of preparation steps (12), wherein the preparation steps comprise preparation steps to be performed manually by the user, in which the user has to take action,
- performing comparisons between target working times (t1 - t7) specified in the recipe (11) for carrying out the preparation steps (12) and actual working times actually required by a user of the food processor (10) for carrying out the preparation steps (12),
- determining at least one speed factor (f1; f2; f3, f4; f5) relating to a working speed of the user on the basis of the comparisons carried out, the at least one speed factor (f1; f2; f3, f4; f5) being obtained by dividing the actual working times by the corresponding target working times (t1 - t7), and
- determining at least one future target working time for carrying out at least one future preparation step (12) on the basis of a predetermined target working time and the at least one determined speed factor (f1; f2; f3, f4; f5),
- the food processor (10) having a profile memory (18), or being set up to access a decentralized profile memory, for example a network and/or a cloud environment, for storing different user profiles of different users of the food processor (10), the food processor (10) being configured and designed in such a way that different speed factors (f1, f5) of different users are assigned to the respective user profile and the at least one future target working time is determined on the basis of at least one user-specific speed factor (f1; f2; f3, f4; f5) from the user profile used for food preparation.

2. Food processor (10) according to claim 1, which is configured and designed in such a way that an end time (16) of the food preparation and/or a remaining time duration (17) until the end time (16) is reached are determined on the basis of the at least one speed factor (f1; f2; f3, f4; f5) and/or on the basis of the at least one determined future target working time and are displayed perceptibly for the user.

3. Food processor (10) according to one of the preceding claims, which is configured and designed in such a way that the at least one future target working time is determined during the food preparation and/or is perceptibly displayed for the user during the food preparation.

4. Food processor (10) according to any one of the preceding claims, configured and designed to determine the future target working time for performing a future manual preparation step (12), wherein the target working time is multiplied by the at least one speed factor (f1; f2; f3, f4; f5) to obtain the future manual preparation step (12).

5. Food processor (10) according to one of the preceding claims, which is configured and designed in such a way that an average speed factor (f2) with respect to an average working speed of the user is determined on the basis of the comparisons and the at least one future target working time for carrying out the at least one future preparation step (12) is determined on the basis of a predetermined target working time and the determined average speed factor (f2).

6. Food processor (10) according to one of the preceding claims, which is configured and designed in such a way that different specific speed factors (f3, f4) with respect to a respective working speed for different preparation steps (12) are determined on the basis of the comparisons, and the at least one future target working time for carrying out the at least one future preparation step (12) is determined on the basis of a specific speed factor (f3, f4).

7. A method of food preparation using a food processor (10) according to any one of the preceding claims, comprising:
- electronically accessing a recipe (11) and processing the recipe (11) to perform food preparation with multiple preparation steps (12),
- performing comparisons between target working times (t1 - t7) specified in the recipe (11) for carrying out the preparation steps (12) and actual working times actually required by a user of the food processor (10) for carrying out the preparation steps (12),
- determining at least one speed factor (f1; f2; f3, f4; f5) relating to a working speed of the user on the basis of the comparisons carried out, the at least one speed factor (f1; f2; f3, f4; f5) being obtained by dividing the actual working times by the corresponding target working times (t1 - t7), and
- determining at least one future target working time for carrying out at least one future preparation step (12) on the basis of a predetermined target working time and the at least one determined speed factor (f1; f2; f3, f4; f5)
- wherein different speed factors (f1, f5) of different users are assigned to a respective user profile and the at least one future target working time is determined on the basis of at least one user-specific speed factor (f1; f2; f3, f4; f5) from the user profile used for food preparation, wherein the user profile is stored in a profile memory (18) of the food processor (10) or in a decentralized profile memory, for example a network and/or a cloud environment.

8. Method according to claim 7, wherein an end time (16) of the food preparation and/or a remaining time duration (17) until the end time (16) is reached are determined on the basis of the at least one speed factor (f1; f2; f3, f4; f5) and/or on the basis of the at least one determined future target working time and are displayed perceptibly for the user.

9. Method according to any one of claims 7 to 8, wherein the at least one future target working time is determined during the food preparation and/or is perceptibly displayed to the user during the food preparation.

10. Method according to any one of claims 7 to 9, wherein an average speed factor (f2) with respect to an average working speed of the user is determined on the basis of the comparisons, and the at least one future target working time for performing the at least one future preparation step (12) is determined on the basis of a predetermined target working time and the determined average speed factor (f2).

11. Method according to one of claims 7 to 10, wherein different specific speed factors (f3, f4) with respect to a respective working speed for different preparation steps (12) are determined on the basis of the comparisons, and the at least one future target working time for carrying out the at least one future preparation step (12) is determined on the basis of a specific speed factor (f3, f4).

12. A computer program product (14) comprising instructions which, when the computer program product (14) is executed by a computer, cause the computer to perform the method according to any one of claims 7 to 11.

13. A computer-readable storage medium (15) with a computer program product (14) stored thereon according to claim 12.

## Revendications

1. Robot ménager (10) configuré et agencé pour :
- l'accès électronique à une recette (11) et le traitement de la recette (11) pour réaliser une préparation alimentaire comprenant une pluralité d'étapes de préparation (12), les étapes de préparation comprenant des étapes de préparation à exécuter manuellement par l'utilisateur, dans lesquelles l'utilisateur doit agir lui-même,
- effectuer des comparaisons entre des temps de travail théorique (t1 - t7) prescrits dans la recette (11) pour l'exécution des étapes de préparation (12) et des temps de travail réels effectivement requis par un utilisateur du robot ménager (10) pour l'exécution des étapes de préparation (12),
- déterminer au moins un facteur de vitesse (f1 ; f2 ; f3, **f4** ; f5) concernant une vitesse de travail de l'utilisateur à l'aide des comparaisons effectuées, ledit au moins un facteur de vitesse (f1 ; f2 ; f3, f4 ; f5) étant obtenu en divisant les temps de travail réels par les temps de travail théoriques correspondants (t1 - t7), et
- détermination d'au moins un temps de travail théorique futur pour l'exécution d'au moins une étape de préparation future (12) à l'aide d'un temps de travail théorique prédéfini et du au moins un facteur de vitesse déterminé (f1 ; f2 ; f3, f4 ; f5),
- dans lequel le robot ménager (10) comporte une mémoire de profil (18) ou est conçu pour accéder à une mémoire de profil décentralisée, par exemple un réseau et/ou un environnement en nuage, pour stocker différents profils d'utilisateur de différents utilisateurs du robot ménager (10), le robot ménager (10) étant configuré et conçu de telle sorte que différents facteurs de vitesse (f1, f5) de différents utilisateurs soient associés au profil d'utilisateur respectif et que l'au moins un temps de travail théorique future soit déterminée à l'aide d'au moins un facteur de vitesse spécifique à l'utilisateur (f1 ; f2 ; f3, f4 ; f5) à partir du profil d'utilisateur utilisé pour la préparation des aliments.

2. Robot ménager (10) selon la revendication 1, qui est configuré et conçu de telle sorte qu'à l'aide de l'au moins un facteur de vitesse (f1 ; f2 ; f3, f4 ; f5) et/ou à l'aide de l'au moins un temps de travail théorique futur déterminé, un moment de fin (16) de la préparation des aliments et/ou une durée de temps restante (17) jusqu'à ce que le moment de fin (16) soit atteint sont déterminés et représentés de manière perceptible pour l'utilisateur.

3. Robot ménager (10) selon l'une des revendications précédentes, qui est configuré et conçu de telle sorte que le au moins un temps de travail théorique futur est déterminé pendant la préparation des aliments et/ou est représenté de manière perceptible pour l'utilisateur pendant la préparation des aliments.

4. Robot ménager (10) selon l'une quelconque des revendications précédentes, configuré et agencé pour déterminer le temps de travail théorique futur pour réaliser une étape de préparation manuelle future (12), ledit temps de travail théorique étant multiplié par ledit au moins un facteur de vitesse (f1 ; f2 ; f3, f4 ; f5) pour obtenir ladite étape de préparation manuelle future (12).

5. Robot ménager (10) selon l'une des revendications précédentes, qui est configuré et conçu de telle sorte qu'à l'aide des comparaisons, on détermine un facteur de vitesse moyen (f2) par rapport à une vitesse de travail moyenne de l'utilisateur et que l'on détermine l'au moins une durée de travail théorique future pour l'exécution de l'au moins une étape de préparation future (12) à l'aide d'une durée de travail théorique prédéfinie et du facteur de vitesse moyen déterminé (f2).

6. Robot ménager (10) selon l'une des revendications précédentes, qui est configuré et conçu de telle sorte qu'à l'aide des comparaisons, différents facteurs de vitesse spécifiques (f3, f4) sont déterminés en ce qui concerne une vitesse de travail respective pour différentes étapes de préparation (12) et que le au moins un temps de travail théorique futur pour l'exécution de la au moins une étape de préparation future (12) est déterminée à l'aide d'un facteur de vitesse spécifique (f3, f4).

7. Procédé de préparation d'aliments en utilisant un robot ménager (10) selon l'une quelconque des revendications précédentes, comprenant :
- l'accès électronique à une recette (11) et le traitement de la recette (11) pour réaliser la préparation d'aliments comprenant plusieurs étapes de préparation (12),
- effectuer des comparaisons entre des temps de travail théorique (t1 - t7) prescrits dans la recette (11) pour l'exécution des étapes de préparation (12) et des temps de travail réels effectivement requis par un utilisateur du robot ménager (10) pour l'exécution des étapes de préparation (12),
- déterminer au moins un facteur de vitesse (f1 ; f2 ; f3, f4 ; f5) concernant une vitesse de travail de l'utilisateur à l'aide des comparaisons effectuées, ledit au moins un facteur de vitesse (f1 ; f2 ; f3, f4 ; f5) étant obtenu en divisant les temps de travail réels par les temps de travail théoriques correspondants (t1 - t7), et
- détermination d'au moins un temps de travail théorique futur pour l'exécution d'au moins une étape de préparation future (12) à l'aide d'un temps de travail théorique prédéfini et du au moins un facteur de vitesse déterminé (f1 ; f2 ; f3, f4 ; f5),
- différents facteurs de vitesse (f1, f5) étant attribués par différents utilisateurs à un profil d'utilisateur respectif et l'au moins un temps de travail théorique futur étant déterminé à l'aide d'au moins un facteur de vitesse (f1 ; f2 ; f3, f4 ; f5) spécifique à l'utilisateur à partir du profil d'utilisateur qui est utilisé pour la préparation des aliments, le profil d'utilisateur étant enregistré dans une mémoire de profil (18) du robot ménager (10) ou dans une mémoire de profil décentralisée, par exemple un réseau et/ou un environnement en nuage.

8. Procédé selon la revendication 7, dans lequel, à l'aide de l'au moins un facteur de vitesse (f1 ; f2 ; f3, f4 ; f5) et/ou à l'aide de l'au moins un temps de travail théorique futur déterminé, un moment de fin (16) de la préparation des aliments et/ou une durée de temps restante (17) jusqu'à ce que le moment de fin (16) soit atteint sont déterminés et représentés de manière perceptible pour l'utilisateur.

9. Procédé selon l'une des revendications 7 à 8, dans lequel l'au moins un temps de travail théorique futur est déterminé pendant la préparation des aliments et/ou est représenté de manière perceptible pour l'utilisateur pendant la préparation des aliments.

10. Procédé selon l'une des revendications 7 à 9, dans lequel on détermine à l'aide des comparaisons un facteur de vitesse moyen (f2) par rapport à une vitesse de travail moyenne de l'utilisateur et on détermine l'au moins une durée de travail théorique future pour réaliser l'au moins une étape de préparation future (12) à l'aide d'une durée de travail théorique prédéfinie et du facteur de vitesse moyen (f2) déterminé.

11. Procédé selon l'une des revendications 7 à 10, dans lequel, à l'aide des comparaisons, on détermine différents facteurs de vitesse spécifiques (f3, f4) concernant une vitesse de travail respective pour différentes étapes de préparation (12) et on détermine le au moins un temps de travail théorique futur pour l'exécution de la au moins une étape de préparation future (12) à l'aide d'un facteur de vitesse spécifique (f3, f4).

12. Produit programme d'ordinateur (14) comprenant des instructions qui, lorsque le produit programme d'ordinateur (14) est exécuté par un ordinateur, amènent ce dernier à exécuter le procédé selon l'une quelconque des revendications 7 à 11.

13. Support de stockage lisible par ordinateur (15) sur lequel est stocké un produit programme d'ordinateur (14) selon la revendication 12.
